# EUROPEAN PATENT APPLICATION

(11) **EP 2 584 468 A1**
(43) Date of publication of application: **24.04.2013**
(21) Application number: 12174866.9
(22) Date of filing: 04.07.2012
(51) Int. Cl.: G06F 13/10, G06F 13/38, G06F 13/42, G06F 9/445, G06F 9/44

(54) **Electronic systems and management methods using the same**

(30) Priority: 20.10.2011 TW 100138025
(71) Applicant: Acer Incorporated, Taipei Hsien 221 (TW)
(72) Inventor: Lin, Yu-Ting, 221 Taipei Hsien (TW); Hsieh, Ho-Kuang, 221 Taipei Hsien (TW)
(74) Representative: Becker Kurig Straus

(57) **Abstract**

Management methods for use in an electronic system having electronic devices and a host device in a daisy-chain configuration are provided. The Management method includes determining that the electronic system has a first connected combination when detecting that first electronic device and second electronic device have been connected with the host device; searching for a first set of software that are suitable for a combination of the first and second electronic devices according to the first connected combination; and installing or activating the first set of software that are suitable for a combination of the first and second electronic devices.

## Description

### CROSS REFERENCE TO RELATED APPLICATIONS

This Application claims priority of Taiwan Application No. 100138025, filed on Oct. 20, 2011, and the entirety of which is incorporated by reference herein.

### BACKGROUND OF THE INVENTION

### Field of the Invention

The disclosure relates generally to electronic systems and related management methods, and, more particularly to electronic systems with a plurality of devices that are connected in a daisy-chain configuration and related management methods.

### Description of the Related Art

With vigorous development of computers and communications industry, various peripherals can easily be connected to a host device such as a personal computer (PC), a notebook PC and so on, including internet and external storage devices and so on. Such peripheral devices and host devices may be assembled to form an electronic system with multifunction. Users may optionally through expansion or change of peripheral devices to enhance or change the performance of the electronic system. In general, for a newly added peripheral device to be capable of normal operation, prior to its use, the user has to install appropriate software application or drivers in the system. For example, when the user connected a blue-ray player to the computer, whereas blue-ray player software has to be found and automatically installed, so that blue-ray movies can be played by the blue-ray player. When the user connected a screen and a GPS antenna to the computer, navigation software has to be found and installed, so that the hardware functions of the GPS antenna and screen can be used. However, the software suitable for combinations of peripheral devices to the host device is bought through surfing the internet or shopping by the user's own buying, and the corresponding software can not be obtained automatically.

Recently, applicable application software can be activated automatically specific to a single hardware though, such as when the user inserts a disc, a burn option of the burning software will pop-up, however, there is no application software suitable for automatically activating specific multiple hardware. Thus, when there is a change to the hardware combinations of peripheral devices, the software can not be automatically adjusted specific to the hardware combinations. Therefore, there is a need for a method of automatically acquiring corresponding software in accordance with the change of hardware combinations.

### BRIEF SUMMARY OF THE INVENTION

Electronic systems and management methods using the same are provided to automatically activate corresponding software in response to hardware combinations thereof.

In an embodiment, a management method for use in an electronic system having electronic devices and a host device connected in a daisy-chain configuration is provided. The management method comprises the steps of determining that the electronic system has a first connected combination when detecting that a first electronic device and a second electronic device have been connected with the host device, searching for a first set of software that are suitable for a combination of the first and second electronic devices according to the first connected combination, and installing or activating the first set of software that are suitable for the combination of the first and second electronic devices.

Another embodiment of an electronic system comprises at least first and second electronic devices and a host device. The first and second electronic devices and the host device are connected in a daisy-chain configuration. The host device is arranged for determining that the electronic system has a first connected combination when detecting that the first electronic device and the second electronic device are connected with the host device, searching for a first set of software that are suitable for a combination of the first and second electronic devices according to the first connected combination, and installing or activating the first set of software that are suitable for the combination of the first and second electronic devices.

Management methods may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating an embodiment of an electronic system of the invention;

Fig. 2 is a flowchart of an embodiment of a management method of the invention;

Figs. 3A and 3B are schematic diagrams illustrating another embodiments of an electronic system of the invention;

Fig. 4 is a flowchart of another embodiment of a management method of the invention; and

Fig. 5 is a flowchart of yet another embodiment of a management method of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

Embodiments of the invention provide electronic systems and management methods, which can automatically search for corresponding software in accordance with features of connected combination of connected external hardware, and thereupon automatically install or activate the corresponding software, so that the user operation can be more convenient.

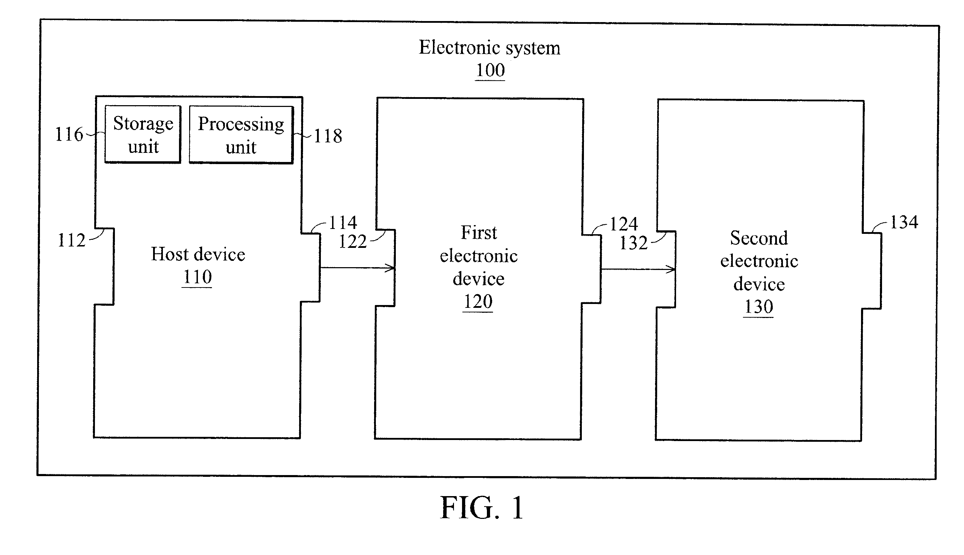

Fig. 1 is a schematic diagram illustrating an embodiment of an electronic system of the invention. The electronic system 100 of the invention at least a host device 110 and at least a first electronic device 120 and a second electronic device 130. The host device 110 may include computer systems, such as personal computers, handhold devices and portable devices, e.g. a laptop computer, a PDA (personal digital assistant), a network computer, a mini-computer or any other type of similar devices. However, it is to be understood that the invention is not limited thereto. The first electronic device 120 or the second electronic device 130 may be any type of peripheral device or hardware component. For example, the first electronic device 120 or the second electronic device 130 may be a optical disk drive, a hard disk driver (HDD), a graphics processing unit (GPU) device, a speaker and so on, but it is not limited thereto. Each of the host device 110, the first electronic device 120 and the second electronic device 130 may have a high speed transmission interface, e.g., a Thunderbolt or Light Peak interface such that the first electronic device 120 and the second electronic device 130 may use a transport protocol compatible with a specific high speed transmission interface to communicate with the host device 110. The host device 110, the first electronic device 120 and the second electronic device 130 are connected together in a daisy chain configuration. Wherein, each of the host device 110, and the first electronic device 120 and the second electronic device 130 has two connecting ends respectively, and one of the connecting end may be connected to any one of the connecting end of any one of the electronic device, and the other connecting end can be connected to one of the connecting end of another electronic device, so that those can be daisy chain configuration connected. For example, two connecting ends may be physically a male and a female form respectively, so that connection made easy, but the invention is not limited thereto. In practice, each connecting end may perform data input and output for data transmission. It is to be noted that, the number and the type of the electronic devices are provided for illustration, but are not limited thereto, any electronic device having the thunderbolt interface or any interface faster than the thunderbolt interface or electronic devices which are connected in a daisy chain configuration may be serve as electronic device embodiments of the invention.

The host device 110 may further include a connecting end 112, a connecting end 114, a storage unit 116 and a processing unit 118. The connecting end 112 or 114 can be equipped with a connecting interface such as a high speed transmission interface, wherein, the connecting end 114 is connected to the connecting end 122 of the first electronic device 120 with same connecting interface, and the connecting end 124 of the first electronic device 120 is connected to the connecting end 132 of the second electronic device 130 with same connecting interface. The storage unit 116 is arranged for storing a registered software list of all registered software. The registered software list may include specific identification data regarding the electronic device suitable for each of the registered software or regarding all kinds of connected device combinations. Note that each electronic device may be equipped with a specific identification data, arranged for representing the equipped function, and according to the specific identification data, the processing unit 118 may determine which electronic devices are added into or removed from the electronic system 100. In other words, the processing unit 118 is capable of detecting all electronic devices about whether it is assembled with or has been disconnected from the host device 110.

It is understood that, in this embodiment, for knowing what software corresponding to which electronic device or connected device combination, any software B that installed in the host device 110 require to register to the processing unit 118 during the process of installation, wherein the registration contents include the information of which connected device combination that the software B is suitable for and should be stored in the registered software list in storage unit 116. Similarly, for knowing what kind of electronic device or connected device combination that the software C equipped in the server of the network corresponds to, the server should be able to provide the information regarding that this software C is suitable for what kind of connected device combination to the host device 110. Therefore, the software suitable for specific connected device combination can be obtained by the processing unit 118 according to aforementioned information. For example, assume that the identification data or the first electronic device 120 and the second electronic device 130 are D and E respectively, and software C is marked as suitable for the software of connected device combination of identification data D and E, the processing unit 118 may find the software C according to the identification data D of the first electronic device 120 and the identification data E of the second electronic device 130 from a registered software list in the storage unit 116, or the server at the network end.

Note that the number and the type of the electronic devices are provided for illustration, but are not limited thereto. In some embodiments, the electronic system 100 may include more than two electronic devices and thus the management method of the invention may also be applied to the electronic system with a combination of more than two electronic devices. The responsive management method will be discussed further in the following paragraphs.

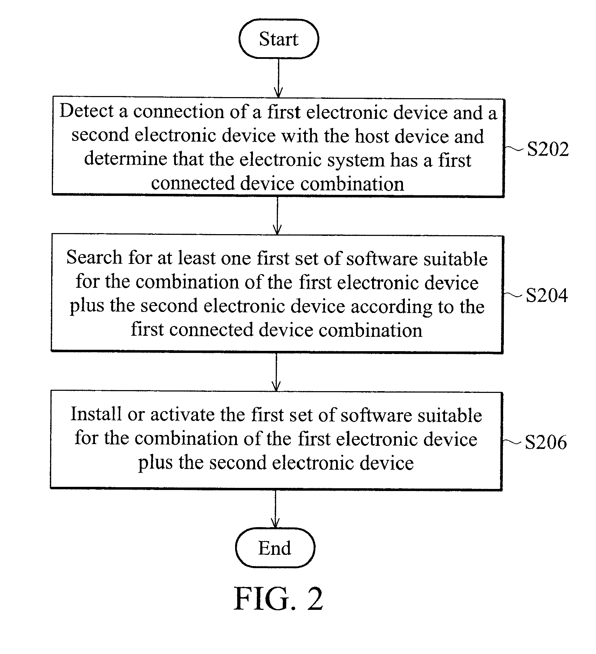

Fig. 2 is a flowchart of an embodiment of a management method of the invention. Please refer to Figs. 1 and 2. The management method can be applied to the host device 110 of the electronic system 100 for providing proper software choices according to the variations in connected device combinations.

First, in step S202, the processing unit 118 continuously detects connection status of the electronic device and the host device 110, and when a connection of a first electronic device and a second electronic device with the host device 110 is detected, it determines that the electronic system 100 has a first connected device combination. Note that each electronic device may include a specific identification data for representing the functionalities equipped therewith. Therefore, the processing unit 118 may obtain information about what electronic devices are added into the electronic system 100 based on responsive identification data of the electronic devices. For example, in this embodiment, because the processing unit 118 detected the connections of the first electronic device 120 and the second electronic device 130 with the host device 110, therefore, the first connected combination represents a device combination of the first electronic device 120 plus the second electronic device 130. Next, in step S204, the processing unit 118 searches for at least one first set of software suitable for the combination of the first electronic device 120 plus the second electronic device 130 according to the first connected combination. In some embodiments, the processing unit 118 searches for the at least one first set of software that is suitable for the combination of the first electronic device 120 plus the second electronic device 130 according to the first connected combination may be achieved by searching a registered software list in the storage unit 116 of the host device 110 or searching a server in a network, such as a cloud server or an application store (APP store) provided by network system entrepreneurs. The processing unit 118 may then search for corresponding software from the registered software list in the storage unit 116 of the host device 110 or from the server in the network according to the responsive identification data for each electronic device. Note that the found first set of software can include at least one or the combinations of a first software corresponding to the first electronic device 120, a second software corresponding to the second electronic device 130 as well as at least one third software corresponding to the first electronic device 120 plus the second electronic device 130.

When the first set of software suitable for the combination of the first electronic device 120 plus the second electronic device 130 is found, in step S206, the processing unit 118 installs or activates the first set of software suitable for the combination of the first electronic device 120 plus the second electronic device 130.

In some embodiments, when multiple kind of the first set of software suitable for the combination of the first electronic device 120 plus the second electronic device 130 are found, prior to installation or activation of the found software applicable to the combination of the first electronic device 120 plus the second electronic device 130, the processing unit 118 may firstly display an available software list of applicable software of all software found, then determine whether to install or activated the software found in response to a user selection. To be more specific, the processing unit 118 may recommend one of the software of the software combinations that applicable for combination of the first electronic device 120 plus the second electronic device 130 from preset or user history records, to the user, then the user can choose to install or activate the recommended software, or can also select another software from the available software list to install or activate.

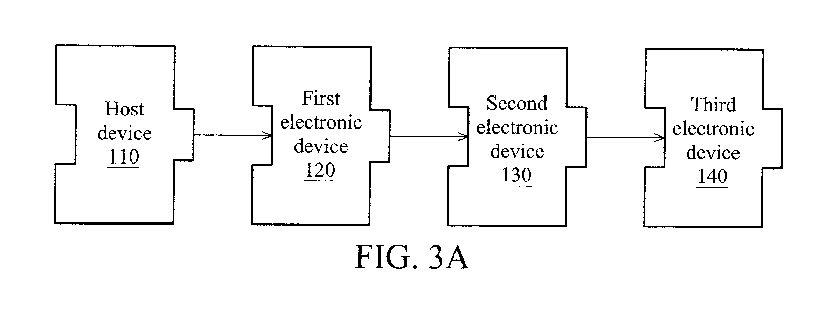

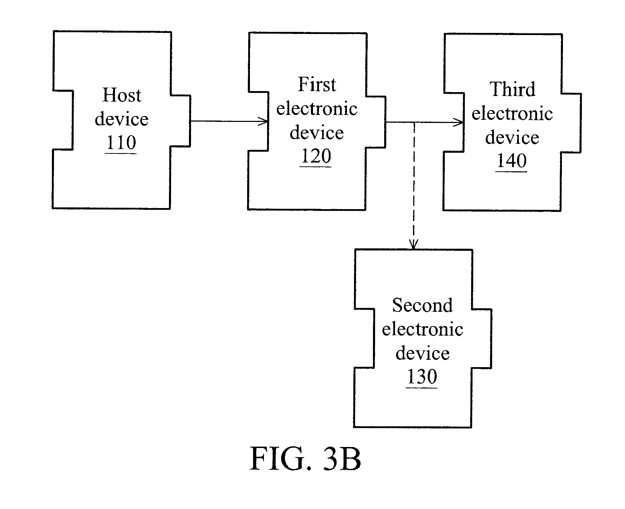

In some embodiments, when a new electronic device is added to the electronic system 100 and connected to the host device 110, or any connected electronic device is removed and has been disconnected from the host device 110, the management method of the invention may further detect and recognize the new connected combination and provide software that suitable for the new connected combination. As shown in Fig. 3A, a situation that a new third electronic device is added to the electronic system 100 and connected to the host device 110 is illustrated. As shown in Fig. 3B, a situation that the second electronic device 130 is removed from the electronic system 100 of Fig. 3A and has been disconnected with the host device 110 is illustrated.

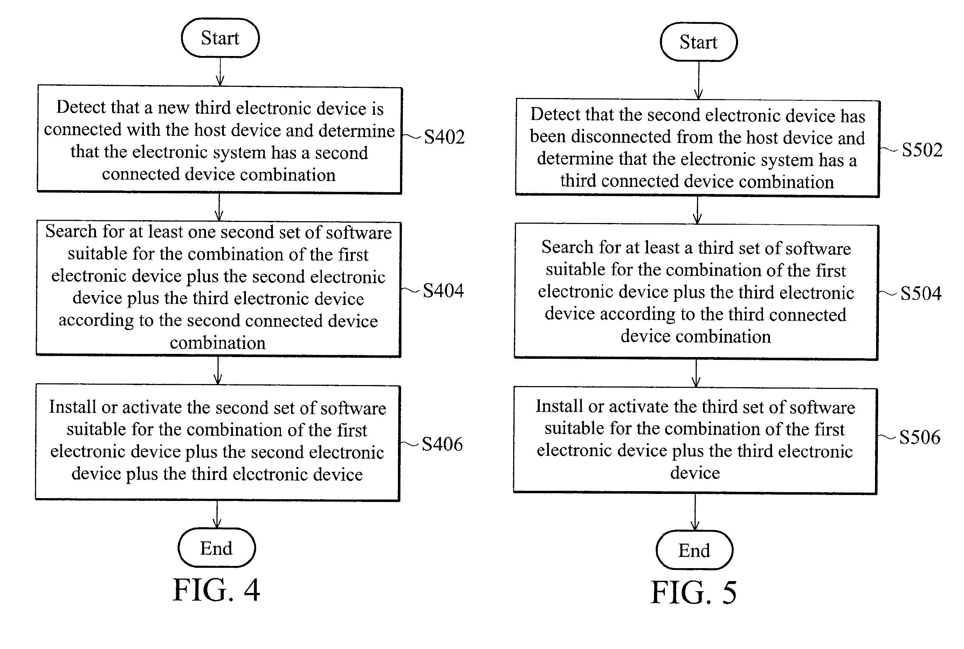

Fig. 4 is a flowchart of another embodiment of a management method of the invention. Please refer to Figs. 1 and 4. The management method can be applied to the host device 110 of the electronic system 100..

When a third electronic device 140 is newly connected to the second electronic device 130 (as shown in Fig. 3A), in step S402, the processing unit 118 detects that a third electronic device 140 is connected with the host device 110 and determines that the electronic system 100 has a second connected device combination, wherein the second connected device combination represents a device combination of the first electronic device 120, the second electronic device 130 and the third electronic device 140. Next, in step S404, the processing unit 118 searches for at least one second set of software suitable for the combination of the first electronic device 120 plus the second electronic device 130 plus the third electronic device 140 according to the second connected combination. Similarly, the processing unit 118 may search the registered software list in the storage unit 116 of the host device 110 or search a server in a network to search for the at least one second set of software that is suitable for the combination of the first electronic device 120 plus the second electronic device 130 plus the third electronic device 140 according to the specific identification data of the first electronic device 120, the second electronic device 130 and the third electronic device 140. Similarly, the found second set of software suitable for the combination of the first electronic device 120 plus the second electronic device 130 plus the third electronic device 140 can include at least one or the combinations of a software corresponding to the first electronic device 120, a software corresponding to the second electronic device 130, a software corresponding to the third electronic device 140 as well as at least one software corresponding to the first electronic device 120 plus the second electronic device 130 plus the third electronic device 140.

In some embodiments, the processing unit 118 may first search the registered software list in the storage unit 116 of the host device 110 for finding software corresponding to the specific identification data of the first electronic device 120, the second electronic device 130 and the third electronic device 140. And, the processing unit 118 may further search for software suitable for the combination of the first electronic device 120 plus the second electronic device 130 plus the third electronic device 140 in the server at the network end only if such software can not be found.

Thereafter, in step S406, the processing unit 118 installs or activates the second set of software suitable for the combination of the first electronic device 120 plus the second electronic device 130 plus the third electronic device 140. In some embodiments, the processing unit 118 may first search the registered software list in the storage unit 116 of the host device 110 for finding software corresponding to the specific identification data of the first electronic device 120, the second electronic device 130 and the third electronic device 140 and if found, activates responsive software; otherwise (i.e. such software can not be found), further search in the server at the network end to find the at least one second set of software suitable for the combination of the first electronic device 120 plus the second electronic device 130 plus the third electronic device 140 and then automatically installs found software.

Fig. 5 is a flowchart of yet another embodiment of a management method of the invention. Please refer to Figs. 1 and 5. The management method can be applied to the host device 110 of the electronic system 100.

When the second electronic device 130 is removed from the electronic system 100 (as shown in Fig. 3B), in step S502, the processing unit 118 detects that its currently device combination is changed to a device combination of the first electronic device 120 and the third electronic device 140 and determines that the electronic system 100 has a third connected device combination, wherein the third connected device combination represents a device combination of the first electronic device 120 and the third electronic device 140. When determining that the electronic system 100 has the third connected device combination, next, in step S504, the processing unit 118 searches for at least a third set of software suitable for the combination of the first electronic device 120 plus the third electronic device 140 according to the third connected combination. Similarly, the third set of software suitable for the combination of the first electronic device 120 plus the third electronic device 140 can include at least one or the combinations of a software corresponding to the first electronic device 120, a software corresponding to the third electronic device 140 as well as at least one software corresponding to the first electronic device 120 plus the third electronic device 140. After the third set of software has been found from the registered software list in the storage unit 116 of the host device 110 or a server at the network end, in step S506, the processing unit 118 installs or activates the third set of software suitable for the combination of the first electronic device 120 plus the third electronic device 140.

In some embodiments, the host device 110 may further provide a user interface (not shown) for the user such that the user may revise or configure the responsive electronic device combination of all software, including drivers and applications, in advance via the user interface.

For explanation, management methods are illustrated as examples in this embodiment, and those skilled in the art will understand that the present invention is not limited thereto. In the following embodiments, it is assumed that the host device 110 is a personal computer (PC) and the electronic devices 120 and 130 can be peripheral devices with same or different type, such as hard disk drives (HDD), memories, optical disc drives, cameras, display screens, graphics processing units (GPU), GPS antennas, wireless communication modules such as a 3G module that can establish a communication link with a 3G network and so on, but it is not limited thereto.

For example, when a camera CA (the first electronic device 120) is connected to the PC, the processing unit 118 may detect that a camera CA is connected to it, as a result, self-operated connects itself to an APP store on the network, finds a vehicle driving recorder software of the first connected combination corresponding to the PC plus the camera CA, later on displays the vehicle driving recorder software that suit for camera, so that the user can choose to install or the vehicle driving recorder software can be automatically installed, such that the electronic system 100 can be equipped with a function of vehicle driving recorder. Thereafter, if a GPS antenna 130 (the second electronic device 130) and a screen 140 (the third electronic device 140) further be connected, the processing unit 118 detects the second connected combination of the PC plus the camera CA, plus the GPS antenna, and plus the screen, thereupon, once again self-operated connects itself to the APP store on the network, finds a vehicle driving recorder software and GPS navigation software corresponding to the combination of the PC plus the camera CA, plus the GPS antenna, and plus the screen and provides for the user to choose for installation, so that the electronic system 100 can be equipped with both functions of GPS navigation and vehicle driving recorder. Similarly, if a 3G module is further connected later, the processing unit 118 detects the third connected combination of the PC plus the camera CA, plus the GPS antenna plus the screen, and the 3G module, thereupon, once again self-operated connects itself to the APP store on the network, finds a vehicle driving recorder software, GPS software and data streaming service software corresponding to the combination of the PC plus the camera CA, plus the GPS antenna plus the screen, and the 3G module and provides for the user to choose for installation, so that the electronic system 100 can be equipped with both functions of GPS navigation, vehicle driving recorder and remote monitoring.

In sum, the electronic systems and related management methods of the invention can automatically search for corresponding software in accordance with features of connected combination of connected external hardware, and then automatically install or activate the corresponding software, so that the user operation can be more convenient. Moreover, the user can easily assemble an electronic system with various functions by combination of various hardware components, and specific to various hardware component combinations, the software suitable for such combinations can be designed, so that only part of the hardware components need to be updated and more new functions can be provided with matched software, thus enhancing the user's willing of buying related software.

Management methods, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. A management method for use in an electronic system having electronic devices and a host device connected in a daisy-chain configuration, the method comprising:
determining that the electronic system has a first connected combination when detecting that a first electronic device and a second electronic device have been connected with the host device;
searching for a first set of software that are suitable for a combination of the first and second electronic devices according to the first connected combination; and
installing or activating the first set of software that are suitable for the combination of the first and second electronic devices.

2. The management method of claim 1, wherein the step of searching for the first set of software that are suitable for the combination of the first and second electronic devices according to the first connected combination is performed by searching a server of a network.

3. The management method of claim 1, wherein the step of searching for the first set of software that are suitable for the combination of the first and second electronic devices according to the first connected combination is performed by searching a registered software list in a storage unit of the host device.

4. The management method of claim 1, further comprising:
determining that the electronic system has a second connected combination when detecting that a third electronic device has been connected with the host device;
searching for a second set of software that are suitable for a combination of the first, second and third electronic devices according to the second connected combination; and
installing or activating the second set of software that are suitable for the combination of the first, second and third electronic devices.

5. The management method of claim 4, further comprising:
determining that the electronic system has a third connected combination when detecting that the second electronic device has been disconnected from the host device;
searching for a third set of software that are suitable for a combination of the first and third electronic devices according to the third connected combination; and
installing or activating the third set of software that are suitable for the combination of the first and third electronic devices.

6. The management method of claim 1, wherein the first set of software that are suitable for the combination of the first and second electronic devices comprise at least one of a first software corresponding to the first electronic device, a second software corresponding to the second electronic device, and at least one third software corresponding to the first and second electronic devices.

7. The management method of claim 1, further comprising:
displaying a software list that includes the first set of software, and determining whether to install or activate the first set of software in response to a user selection prior to installing or activating the first set of software that are suitable for the combination of the first and second electronic devices.

8. An electronic system, comprising:
at least first and second electronic devices; and
a host device, arranged for determining that the electronic system has a first connected combination when detecting that the first electronic device and the second electronic device are connected with the host device, searching for a first set of software that are suitable for a combination of the first and second electronic devices according to the first connected combination, and installing or activating the first set of software that are suitable for the combination of the first and second electronic devices,
wherein the first and second electronic devices and the host device are connected in a daisy-chain configuration.

9. The electronic system of claim 8, wherein the host device searches for the first set of software suitable for the combination of the first and second electronic devices according to the first connected combination is performed by searching a registered software list in a storage unit of the host device or a server of a network.

10. The electronic system of claim 8, wherein the host device is further arranged for determining that the electronic system has a second connected combination when detecting that a third electronic device has been connected with the host device, searching for a second set of software that are suitable for a combination of the first, second and third electronic devices according to the second connected combination, and installing or activating the second set of software that are suitable for the combination of the first, second and third electronic devices

11. The electronic system of claim 10, wherein the second set of software suitable for the combination of the first, second and third electronic devices comprise at least one of a first software corresponding to the first electronic device, a second software corresponding to the second electronic device, a third software corresponding to the third electronic device, and at least one four software corresponding to all possible combinations of the first, second and third electronic devices.

12. The electronic system of claim 10, wherein the host device is further arranged for determining that the electronic system has a third connected combination when detecting that the second electronic device has been disconnected from the host device, searching for a third set of software that are suitable for a combination of the first and third electronic devices according to the third connected combination, and installing or activating the third set of software that are suitable for the combination of the first and third electronic devices.

13. The electronic system of claim 8, wherein the host device is further arranged for displaying a software list that includes the first set of software, and determining whether to install or activate the first set of software in response to a user selection prior to installing or activating the first set of software suitable for the combination of the first and second electronic devices.
